# EUROPÄISCHE PATENTSCHRIFT

(11) **EP 0 731 145 B1**
(45) Veröffentlichungstag und Bekanntmachung des Hinweises auf die Patenterteilung: **01.08.2001**
(21) Anmeldenummer: 96103280.2
(22) Anmeldetag: 04.03.1996
(51) Int. Cl.: C09B 67/22, D06P 1/38

(54) **Schwarze Farbstoffmischungen von faserreaktiven Azofarbstoffen und ihre Verwendung zum Färben von hydroxy- und/oder carbonamidgruppenhaltigem Fasermaterial**
Black dyestuff mixtures of fibre reactive azo dyestuffs and their utilization for dyeing of hydroxy- and/or carbonamide group containing fibre material
Mélanges de colorants noir réactifs azoiques et leur utilisation pour colorier des matériaux fibreux contenant des groupes hydroxy et/ou carbonamide

(30) Priorität: 08.03.1995 DE 19508156
(43) Veröffentlichungstag der Anmeldung: 11.09.1996
(73) Patentinhaber: DyStar Textilfarben GmbH & Co. Deutschland KG, 60318 Frankfurt am Main (DE)
(72) Erfinder: Von der Eltz, Andreas, Dr., D-60431 Frankfurt Am Main (DE); Russ, Werner Hubert, Dr., D-65439 Flörsheim (DE); Buchwald, Dirk, D-65618 Selters (DE)

(56) Entgegenhaltungen:
- JP-A- 2 202 956
- PATENT ABSTRACTS OF JAPAN, unexamined applications, C field, Band 14, Nr. 261, 06. Juni 1990 THE PATENT OFFICE JAPANESE GOVERNMENT Seite 2 C 725; & JP-A-02 073 870 (MITSUBISHI KASEI CORP.)

## Beschreibung

Die Erfindung liegt auf dem technischen Gebiet der faserreaktiven Farbstoffe.

Bei dem Bemühen, die Farbstoffgammen durch moderne Reaktivfarbstoffe zu erweitern oder zu ergänzen, stößt man in vielerlei Hinsicht an Grenzen, die durch eine einzelne Farbstoffkomponente nicht oder nur ungenügend gelöst werden können. Besonders kritisch ist die Synthese von hochschwarzen Farbstoffen ohne Metallkomplex. Der bekannteste schwarze Reaktivfarbstoff ist der mit der Colour-Index-Bezeichnung C.I. Reactive Black 5, einem Disazofarbstoff mit dem 3,6-Disulfo-1-amino-8-naphthol als bivalenter Kupplungskomponente und 4-(β-Sulfoethylsulfonyl)-anilin als den beiden Diazokomponenten; die Nuance dieses Farbstoffes ist jedoch eher ein trübes Marineblau. Um mit ihm tiefschwarze Färbungen zu erhalten, muß er mit orange- oder rotfärbenden, vorteilhafter jedoch mit gelb- und rotfärbenden Farbstoffen in geringen Mengen vermischt (geschönt) werden. Bei diesen Einstellungen kann auch auf eventuelle Metamerie-Probleme (unterschiedliche Abendfarbe) Rücksicht genommen werden.

Aus den japanischen Patentanmeldungs-Veröffentlichungen Hei-2-073870 und Hei-2-202956 sowie aus den koreanischen Patentschriften Nrs. 91/2676, 91/6386 und 91/8343 sind zwar bereits Farbstoffmischungen bekannt, die sich zur Herstellung von tiefschwarzen Färbungen auf Cellulosefasermaterialien eignen. Diese bekannten Farbstoffmischungen weisen jedoch gewisse anwendungstechnische Mängel auf; so ist insbesondere ihre Auswaschbarkeit und ihre Naßliegeechtheit verbesserungsbedürftig.

Mit der vorliegenden Erfindung wurden nun diesbezüglich vorteilhafte Farbstoffmischungen gefunden, die einen oder mehrere, wie 2, 3 oder 4, Disazofarbstoffe entsprechend der allgemeinen Formel (1), einen oder mehrere, wie 2, 3 oder 4, Monoazofarbstoffe entsprechend der allgemeinen Formel (3), einen oder mehrere, wie 2 oder 3, Monoazofarbstoffe der allgemeinen Formel (4), gegebenenfalls einen oder zwei Monoazofarbstoffe der allgemeinen Formel (2) und gegebenenfalls einen oder mehrere, wie 2 oder 3, Monoazofarbstoffe der allgemeinen Formel (5) enthalten.

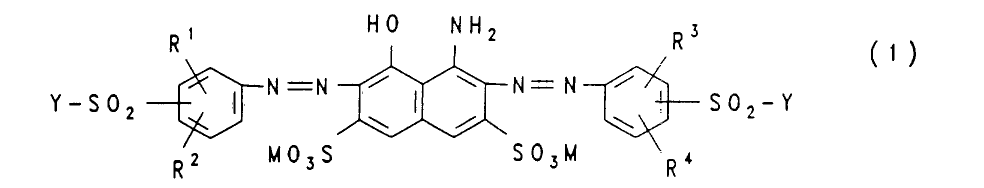

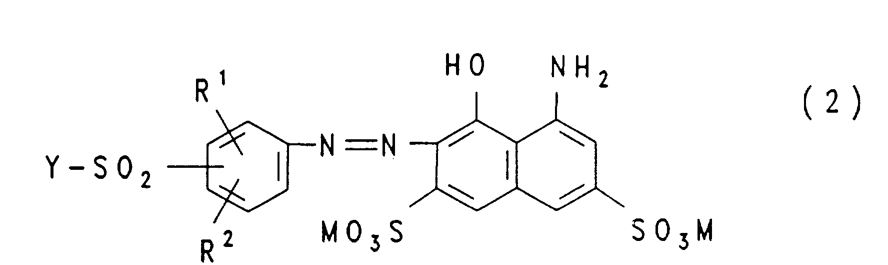

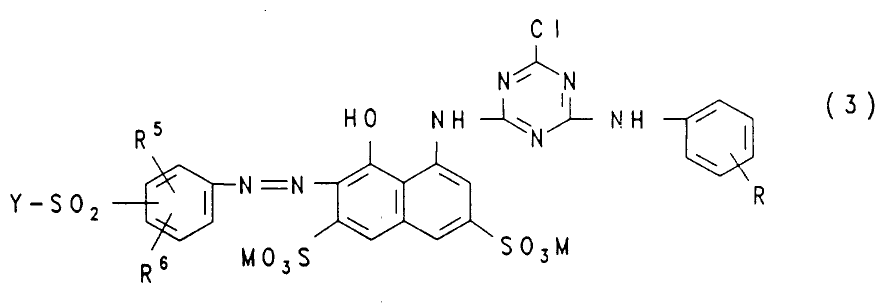

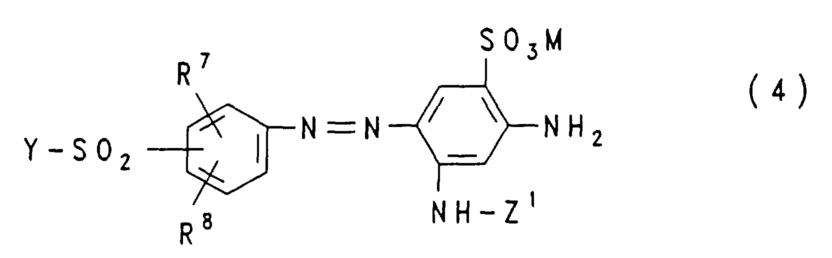

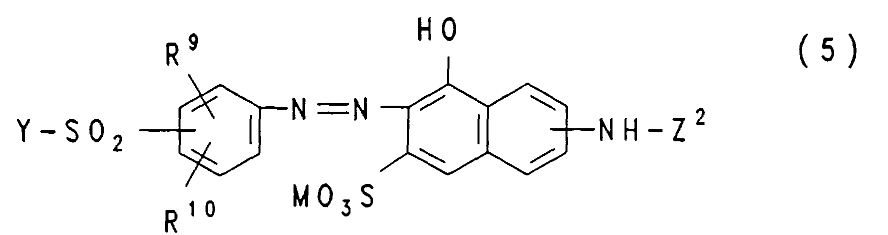

In diesen Formeln bedeuten:
- M: ist Wasserstoff oder ein Alkalimetall, wie Lithium, Natrium und Kalium;
- R¹: ist Wasserstoff, Methyl, Ethyl, Methoxy oder Ethoxy, vorzugsweise Methoxy und Wasserstoff und insbesondere Wasserstoff;
- R²: ist Wasserstoff, Methyl, Ethyl, Methoxy oder Ethoxy, vorzugsweise Wasserstoff;
- R³: ist Wasserstoff, Methyl, Ethyl, Methoxy oder Ethoxy, vorzugsweise Methoxy und Wasserstoff und insbesondere Wasserstoff;
- R⁴: ist Wasserstoff, Methyl, Ethyl, Methoxy oder Ethoxy, vorzugsweise Wasserstoff;
- R⁵: ist Wasserstoff, Methyl, Ethyl, Methoxy oder Ethoxy, vorzugsweise Methoxy und Wasserstoff und insbesondere Wasserstoff;
- R⁶: ist Wasserstoff, Methyl, Ethyl, Methoxy oder Ethoxy, vorzugsweise Wasserstoff;
- R⁷: ist Wasserstoff, Methyl, Ethyl, Methoxy oder Ethoxy, vorzugsweise Methoxy und Wasserstoff und insbesondere Wasserstoff;
- R⁸: ist Wasserstoff, Methyl, Ethyl, Methoxy oder Ethoxy, vorzugsweise Wasserstoff;
- R⁹: ist Wasserstoff, Methyl, Ethyl, Methoxy oder Ethoxy, vorzugsweise Methoxy und Wasserstoff und insbesondere Wasserstoff;
- R¹⁰: ist Wasserstoff, Methyl, Ethyl, Methoxy oder Ethoxy, vorzugsweise Wasserstoff;
- Y: ist jedes, unabhängiges voneinander, Vinyl, β-Chlorethyl, β-Thiosulfatoethyl oder β-Sulfatoethyl;
- R: ist Wasserstoff, Methyl, Sulfo, Carboxy oder eine Gruppe der Formel -SO₂-Y mit Y einer der oben genannten Bedeutungen;
- Z¹: ist Alkanoyl von 2 bis 5 C-Atomen, wie Propionyl und Acetyl, oder ist Benzoyl oder ist 2,4-Dichlor-1,3,5-triazin-6-yl oder ist eine Gruppe der allgemeinen Formel (a) 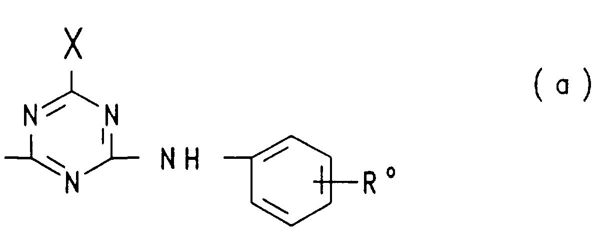 in welcher
X Chlor oder Cyanoamino und
R^{o} Sulfo, Carboxy oder eine Gruppe der allgemeinen Formel -SO₂-Y mit Y einer der oben genannten Bedeutungen ist;
- Z²: hat eine der Bedeutungen von Z¹;
die Gruppe -NH-Z² in Formel (5) steht in 2- oder 3-Stellung an den 6-Sulfo-8-hydroxy-naphth-7-yl-Rest gebunden.

Die einzelnen Formelglieder in den Formeln (1), (2), (3), (4) und (5) können im Rahmen ihrer Definition zueinander von gleicher oder verschiedener Bedeutung sein.

Eine Sulfogruppe ist eine Gruppe der allgemeinen Formel -SO₃M, eine Carboxygruppe eine Gruppe der allgemeinen Formel -COOM , eine Sulfatogruppe eine Gruppe der allgemeinen Formel -OSO₃M und eine Thiosulfatogruppe eine Gruppe der allgemeinen Formel -S-SO₃M, jeweils mit M der oben angegebenen Bedeutung.

Die Farbstoffe der allgemeinen Formeln (1) bis (5) sind beispielsweise aus den deutschen Patentschriften Nrs. 960 534 und 965 902 und der US-Patentschrift Nr. 4 257 770, den europäischen Patentschriften Nrs. 0 032 187, 0 094 055, 0 073 481 und 0 061 151 bekannt oder können analog den dort beschriebenen Verfahrensweisen hergestellt werden.

Die Gruppen Y-SO₂- stehen bevorzugt in meta- oder para-Stellung zu den Azogruppen bzw. Aminogruppen an den Benzolrest gebunden. Bevorzugt ist Y-SO₂- Vinylsulfonyl und insbesondere bevorzugt β-Sulfatoethylsulfonyl.

In Formel (3) ist R bevorzugt eine Gruppe der Formel -SO₂-Y und insbesondere bevorzugt Sulfo. In den Formeln (4) und (5) sind Z¹ und Z² bevorzugt Acetyl. Sind in den anwendungsgemäßen Farbstoffmischungen mehr als ein Monoazofarbstoff entsprechend der allgemeinen Formel (3) enthalten, so sind sie bevorzugt solche Farbstoffe der allgemeinen Formel (3), in welchen die Gruppen Y-SO₂- Vinylsulfonyl und β-Sulfatoethylsulfonyl darstellen und R für Sulfo steht, oder sie sind bevorzugt Farbstoffmischungen von solchen Monoazofarbstoffen der allgemeinen Formel (3), bei welchen die Gruppen R Sulfo und Gruppen der allgemeinen Formel -SO₂-Y sind, wobei die Reste Y in Formel (3) Vinyl und β-Sulfatoethylsulfonyl bedeuten.

Im allgemeinen liegen die Azofarbstoffe der allgemeinen Formeln (1), (2), (3), (4) und (5) in der erfindungsgemäßen Mischung in einem molaren Mischungsverhältnis von 10 : 1,3 : 1,8 : 8,6 : 1,2 bis 10 : 0 : 0,8 : 3,5 : 0, bevorzugt in einem molaren Mischungsverhältnis von 10 : 1,25 : 1,55 : 7,4 : 0,95 bis 10 : 0 : 1,05 : 5,0 : 0, vor.

Sind in den erfindungsgemäßen Farbstoffmischungen zwei oder mehrere Farbstoffe entsprechend der allgemeinen Formel (3) enthalten, bei welchen in einem oder zweien der Farbstoffe der Rest R gleich Sulfo und in dem oder den anderen Farbstoffen der Rest R gleich eine Gruppe der Formel -SO₂-Y ist, so liegen der oder die Farbstoffe der Formel (3) mit R gleich Sulfo und der oder die Farbstoffe der Formel (3) mit R gleich -SO₂-Y zueinander bevorzugt im molaren Mischungsverhältnis von 1 : 1,6 bis 1 : 0,4, insbesondere von 1 : 1,2 bis 1 : 0,8, vor.

Reste von Diazokomponenten in den allgemeinen Formeln (1) bis (5) sowie durch einen Rest R oder R° substituiertes Phenyl in Formeln (3) und (5) sind beispielsweise 3-(β-Sulfatoethylsulfonyl)-phenyl, 4-(β-Sulfatoethylsulfonyl)-phenyl, 2-Methyl-5-methoxy-4-(β-sulfatoethylsulfonyl)-phenyl, 2-Methoxy-5-(β-sulfatoethylsulfonyl)-phenyl und 2,5-Dimethoxy-4-(β-sulfatoethylsulfonyl)-phenyl sowie deren Vinylsulfonyl-, β-Chlorethylsulfonyl- und β-Thiosulfatoethylsulfonyl-Derivate sowie 3-Sulfo-phenyl und 4-Sulfophenyl, hiervon bevorzugt 2-Methoxy-5-(β-sulfatoethylsulfonyl)-phenyl und 2,5-Dimethoxy-4-(β-sulfatoethylsulfonyl)-phenyl und insbesondere 3-(β-Sulfatoethylsulfonyl)-phenyl und 4-(β-Sulfatoethylsulfonyl)-phenyl bzw. 3-Sulfophenyl.

Die Farbstoffe der Formel (1) bis (5) können, insbesondere bei gleichem Chromophor, innerhalb der Bedeutung von Y unterschiedliche faserreaktive Gruppen -SO₂-Y besitzen. Insbesondere können die Farbstoffmischungen Farbstoffe gleichen Chromophors enthalten, in denen die faserreaktiven Gruppen -SO₂-Y zum einen Vinylsulfonylgruppen und zum anderen β-Chlorethylsulfonyl-oder β-Thiosulfatoethylsulfonyl- oder bevorzugt β-Sulfatoethylsulfonyl-Gruppen sind. Enthalten die Farbstoffgemische die jeweiligen Farbstoffkomponenten in Form eines Vinylsulfonyl-Farbstoffes, so liegt der Anteil des jeweiligen Vinylsulfonylfarbstoffes zu dem jeweiligen β-Chlor- oder β-Thiosulfato- oder β-Sulfatoethylsulfonyl-Farbstoff bevorzugt bei bis zu etwa 10 Mol-%, bezogen auf den jeweiligen Farbstoffchromophor vor. Hierbei sind solche Farbstoffmischungen bevorzugt, bei welchen der Anteil an den Vinylsulfonyl-Farbstoffen zu den β-Sulfatoethylsulfonyl-Farbstoffen im Molverhältnis zwischen 2:98 und 10:90 liegt.

Die erfindungsgemäßen Farbstoffmischungen können als Präparation in fester oder in flüssiger (gelöster) Form vorliegen. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat und Dinatriumhydrogenphosphat, geringe Mengen an Sikkativen oder die Löslichkeit verbessernde Mittel, wie die bekannten Naphthalinsulfonsäure-Formaldehyd-Kondensationsprodukte, oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die erfindungsgemäßen Farbstoffmischungen als elektrolytsalzhaltige Farbstoffpulver mit einem Gesamtfarbstoffgehalt von 20 bis 70 Gew.-%, bezogen auf das Farbstoffpulver bzw. die Präparation, vor. Diese Farbstoffpulver/Präparationen können zudem die erwähnten Puffersubstanzen in einer Gesamtmenge von bis zu 5 Gew.-%, bezogen auf das Farbstoffpulver, enthalten. Sofern die erfindungsgemäßen Farbstoffmischungen in wäßriger Lösung vorliegen, beträgt der Gesamtfarbstoffgehalt in diesen wäßrigen Lösungen bis zu etwa 50 Gew.-%, wie beispielsweise zwischen 5 und 40 Gew.-%., wobei der Elektrolytsalzgehalt in diesen wäßrigen Lösungen bevorzugt unterhalb 10 Gew.-%, bezogen auf die wäßrige Lösung, beträgt; die wäßrigen Lösungen (Flüssigpräparationen) können die erwähnten Puffersubstanzen in der Regel in einer Menge von bis zu 5 Gew.-%, bevorzugt bis zu 2 Gew.-%, enthalten.

Die erfindungsgemäßen Farbstoffmischungen können in üblicher Weise hergestellt werden, so durch mechanisches Mischen der einzelnen Farbstoffe oder von Mischungen von 2 oder 3 solcher Einzelfarbstoffe mit den anderen Einzelfarbstoffen in Form von deren Farbstoffpulver oder wäßrigen Lösungen. Werden die erfindungsgemäßen Farbstoffmischungen durch mechanisches Mischen der Einzelfarbstoffe hergestellt, so werden beim Mischen eventuell erforderliche Stellmittel, Entstaubungsmittel oder weitere Hilfsmittel, die in der Färbereitechnik üblich und in den hierzu verwendeten Farbstoffpräparationen üblich sind, zugegeben.

Geht man von wäßrigen Farbstofflösungen der Einzelkomponenten (Einzelfarbstoffe) oder gegebenenfalls von Farbstofflösungen, die bereits zwei oder mehrere dieser Einzelkomponenten enthalten, aus, so gelangt man ebenfalls durch einfaches Vermischen unter Berücksichtigung der Mengen der Farbstofflösungen und deren Farbstoffkonzentrationen zu der gewünschten Farbstoffmischung in wäßriger Form (Flüssigpräparation). Solche wäßrigen Farbstofflösungen der Einzelkomponenten oder Mischungen solcher Einzelkomponenten können auch Syntheselösungen sein, die aus der Synthese der Einzelkomponenten oder, sofern es die Synthese zuläßt, aus der Synthese von Mischungen von Einzelfarbstoffen erhältlich sind. Die so durch Mischung der einzelnen Farbstofflösungen (Syntheselösungen) erhaltenen wäßrigen Lösungen mit den erfindungsgemäßen Farbstoffmischungen können dann direkt, gegebenenfalls nach Filtration, Aufkonzentrieren und/oder Zusatz eines Puffers oder anderer Hilfsstoffe, als Flüssigpräparation der färberischen Verwendung zugeführt werden. Aus ihnen lassen sich aber auch die erfindungsgemäßen pulver- oder granulatförmigen Farbstoffmischungen der gewünschten Zusammensetzung und Einstellung beispielsweise durch Sprühtrocknung und erforderlichenfalls in einem Wirbelbett gewinnen.

Die erfindungsgemäßen wäßrigen Farbstofflösungen mit den erfindungsgemäßen Farbstoffmischungen können jedoch zur Einstellung von gewünschten Farbstoffmischungsverhältnissen und Farbtonnuancen insbesondere vorteilhaft in der Weise erfindungsgemäß miteinander vermischt werden, daß man während der Zugabe der Komponenten (der Farbstofflösungen) den Farbton der Mischung mit einer ATR-Sonde steuert. Hierbei bedient man sich der Multikomponentenanalyse mit Hilfe von UV/VIS-Spektren. Man ermittelt hiermit zunächst die genauen Mengen und Farbstoffkonzentrationen der in den wäßrigen Ausgangslösungen enthaltenen Einzelkomponenten (Einzelfarbstoffe), die dann unter Kontrolle eines Steuerungsverfahrens mittels einer ATR-Sonde in den erforderlichen Mengen miteinander vermischt werden. Die Verfahrensweise basiert auf der Aufzeichnung von UV/VIS-Spektren mit Hilfe eines Photodioden-Spektrometers (s. hierzu auch EP-A-0 385 587) oder eines schnellscannenden Gitterspektrometers mit anschließender Multikomponenten-Analyse, die, nach Eichung mit den reinen Einzelfarbstoffen oder Mischungen solcher Farbstoffe bzw. deren wäßrigen Lösungen, unter mathematischer Zerlegung in die Einzelkornponenten genaue Angaben über die Farbstoffmengen und -konzentrationen in den Lösungen liefert. Zu jedem Zeitpunkt kann über einen Monitor der aktuelle Gehalt der Farbstoffe abgelesen werden. Durch eine hohe Auflösung des Meßgerätes können auch kleinste Absorptions-Schultern erfaßt werden, die zur genauen Abgrenzung der Farbstoffe untereinander dienen.

Es hat sich bewährt, vor Meßbeginn Eichreihen der zu bestimmenden Farbstoffe zu vermessen. Die Eichmessungen können nun sowohl Einzelkomponenten als auch Mischungen mehrerer Komponenten enthalten. Die genauen Konzentrationen werden in das Computerprogramm, getrennt nach Farbstoff, eingegeben. Der Konzentrationsbereich der Eichlösungen sollte den Meßbereich beinhalten. Aus diesen Angaben wird eine Kalibriermatrix errechnet, die zur späteren Bestimmung der Farbstoffkomponenten erforderlich ist. Unter der hier eingesetzten Multikomponenten-Analyse wird die quantitative Analytik von Farbstoffgemischen verstanden, die sich folgender mathematischer Algorithmen bedient: Partial Least Squares Type 1 (PLS-1), Partial Least Squares Type 2 (PLS-2) - Methoden der kleinsten Fehlerquadrate, Principle Component Regression analysis (PCR) sowie Classic Least Squares (CLS) oder Inverse Least Squares (ILS). Die Methode der kleinsten Fehlerquadrate (PLS) sowie die Hauptkomponenten-Regression (PCR) werden bspw. in Anal. Chem. 1988, 60, 1193, Anal. Chem. 1988, 60, 1202 und Anal. Chem. 1990, 62, 1091 von D. Haaland und E. V. Thomas sowie in A. Tutorial, Laboratory for Chemometrics and Center for Process Analytical Chemistry, Dept. of Chemistry, University of Washington, Seattle, WA 98195, von P. Geladi und B. Kowalewski beschrieben. Das Ziel dieser rechnerischen Ansätze ist, mathematische Gleichungen zu erhalten, durch die der Gehalt der unbekannten Mischungen bestimmt werden kann. Das Prinzip des PLS-Algorithmus ist es, die erhältlichen Spektren in eine Reihe mathematischer Spektren zu zerlegen, die als Faktoren beschrieben werden. Eine detaillierte Beschreibung der Vorgehensweise ist aus der angegebenen Literatur erhältlich.

Über einen Zulauf und einen Ablauf werden die einzelnen Farbstofflösungen durch eine Durchflußküvette gepumpt. Der Küvettendurchmesser kann bis zu 0,01 cm klein sein, um auch hochkonzentrierte Lösungen messen zu können. Die Küvette befindet sich in einem UV/VIS-Spektrometer, das entweder ein Diodenzeilen-Spektrometer oder ein schnellscannendes Gitter-Spektrometer ist. Farbstofflösungen von Einzelkomponenten (Einzelfarbstoffen) können direkt spektroskopisch vermessen werden. Bei Farbstoffmischungen, die direkt, ohne aufbereitenden Zwischenschritt, analysierbar sind, kann die ATR-Meßtechnik (Attenuated Total Reflection) eingesetzt werden. Bei dieser Technik wird ein Quarz- oder Alkalimetallglasstab oder eine hierfür geeignete lichttransportierende Vorrichtung in die zu messende Lösung getaucht und an der Grenzfläche zwischen Kristall und Flüssigkeit gemessen. Die hierfür üblicherweise eingesetzten Proben haben eine Konzentration von 5 bis 150 g/l Farbstoff. Die ATR-Sonde ist über einen Glasfaserlichtleiter mit dem Spektrometer verbunden. Die Länge des Lichtleiters kann bei Messungen im VIS-Bereich bis zu 1000 m betragen, weswegen das Spektrometer zentral in einer Meßwarte untergebracht werden kann. Bei explosionsgeschützten Betrieben muß so keine weitere Vorsorge getroffen werden.

Um eine erfindungsgemäße wäßrige Lösung der Farbstoffmischung mit einem bestimmten Farbstoffgehalt und einer bestimmten Farbstoffzusammensetzung der Mischung einstellen zu können, muß die Zielmischung eingemessen und ihre Farbkoordinaten und prozentuale Zusammensetzung ermittelt werden. Diese Daten dienen während der Einstellung bzw. Dosierung der Einzelkomponenten als Zielgröße, gegen die die Farbdifferenz und die Einzelkonzentrationen berechnet und graphisch dargestellt werden. Eine Zugabe der hierzu erforderlichen Farbstoffe als Komponenten der Mischung zu einem bereits vorgelegten Farbstoff der erfindungsgemäßen Mischung, wie beispielsweise der mengemäßigen Hauptkomponente entsprechend den Farbstoffen der allgemeinen Formel (1), erfolgt nun so lange, bis die Zielkonzentrationen sowie der Zielfarbton erreicht ist.

Die erfindungsgemäßen Farbstoffmischungen liefern nach den in der Technik für faserreaktive Farbstoffe zahlreich beschriebenen Anwendungs- und Fixierverfahren auf hydroxy- und/oder carbonamidgruppenhaltigen Fasermaterialien tiefschwarze Färbungen mit gutem Farbaufbau und insbesondere guter Auswaschbarkeit nicht fixierter Farbstoffanteile aus den gefärbten Materialien.

Gegenstand der vorliegenden Erfindung ist somit auch die Verwendung der erfindungsgemäßen Farbstoffmischungen zum Färben (einschließlich Bedrucken) von hydroxy- und/oder carbonamidgruppenhaltigen Fasermaterialien bzw. Verfahren zum Färben solcher Fasermaterialien unter Verwendung einer erfindungsgemäßen Farbstoffmischung, indem man die Farbstoffmischung in gelöster Form auf das Substrat appliziert und die Farbstoffe durch Einwirkung eines alkalisch wirkenden Agens oder durch Hitze oder durch beide Maßnahmen auf der Faser fixiert.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Anwendung der erfindungsgemäßen Farbstoffmischungen erfolgt nach allgemein bekannten Verfahren zum Färben und Bedrucken von Fasermaterialien gemäß den bekannten Anwendungstechniken für faserreaktive Farbstoffe. Da die Farbstoffe der erfindungsgemäßen Farbstoffmischungen zueinander ein sehr gutes Kombinationsverhalten zeigen, können die erfindungsgemäßen Farbstoffmischungen auch mit Vorteil in den Ausziehfärbeverfahren eingesetzt werden. Demgemäß erhält man mit ihnen beispielsweise auf Cellulosefasern nach den Ausziehverfahren aus langer Flotte bei Temperaturen zwischen 40 und 105°C, gegebenenfalls bei Temperaturen bis zu 130°C unter Druck, und gegebenenfalls in Gegenwart von üblichen Färbereihilfsmitteln unter Verwendung von säurebindenden Mitteln und gegebenenfalls neutralen Salzen, wie Natriumchlorid oder Natriumsulfat, Färbungen in sehr guten Farbausbeuten und mit ausgezeichnetem Farbaufbau und gleicher Nuance. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Ebenfalls erhält man nach den üblichen Druckverfahren für Cellulosefasern-die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können,-farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Farbstoffmischungen erhaltenen Fixiergrade sehr hoch. Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe der erfindungsgemäßen Farbstoffmischungen mit den säurebindenden Mitteln, gegebenenfalls unter Wärmeeinwirkung, werden die Farbstoffe chemisch an die Cellulosefaser gebunden; insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

In den Beispielen sind die Formeln der Farbstoffe in Form der freien Säure angegeben; die Mengenteile beziehen sich auf die saure Form. In der Regel werden die Farbstoffe jedoch in der für wasserlösliche Farbstoffe üblich vorliegenden Form als elektrolytsalzhaltiges (beispielsweise natriumchlorid- und natriumsulfathaltiges) Alkalimetallsalz-Pulver eingesetzt. Die angegebenen Mengen sind beispielhaft zu verstehen und limitieren nicht die mögliche Einstellung unterschiedlicher Nuancen.

### Beispiel 1

50 Teile einer wäßrigen Lösung, wie bspw. einer aus der Synthese erhältlichen wäßrigen Lösung, mit 14 Teilen des marineblaufärbenden Disazofarbstoffes der Formel (A) 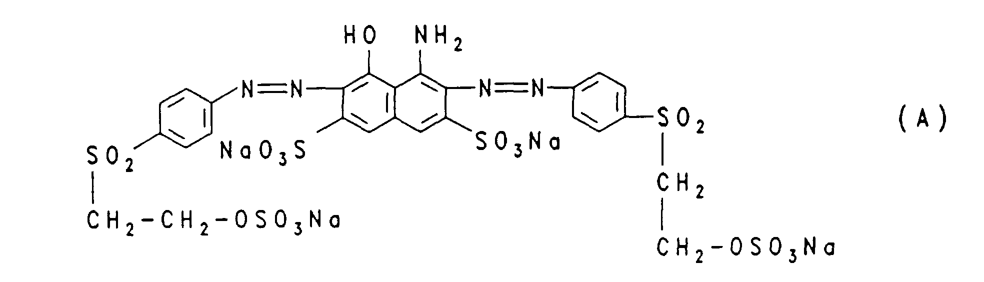 und 1 Teil des rotfärbenden Monoazofarbstoffes der Formel (B) 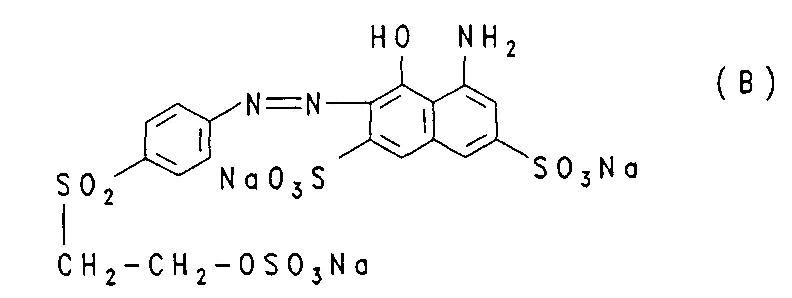 10 Teile einer wäßrigen Lösung, wie bspw. einer aus der Synthese erhältlichen wäßrigen Lösung, mit 2 Teilen des roten Monoazofarbstoffes der Formel (C) 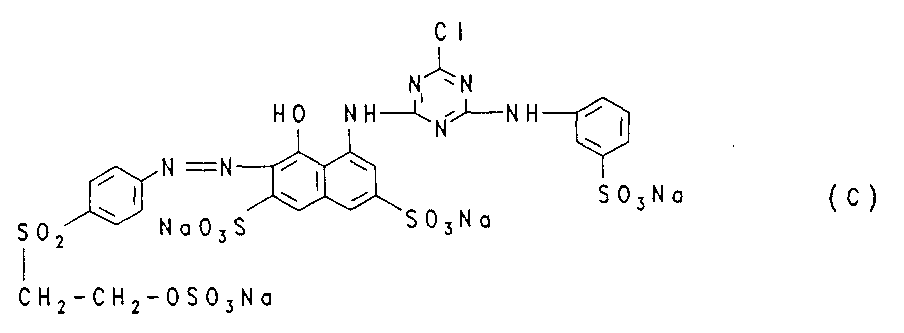 35 Teile einer wäßrigen Lösung, wie bspw. einer aus der Synthese erhältlichen wäßrigen Lösung, mit 5 Teilen des goldgelbfärbenden Monoazofarbstoffes der Formel (D) 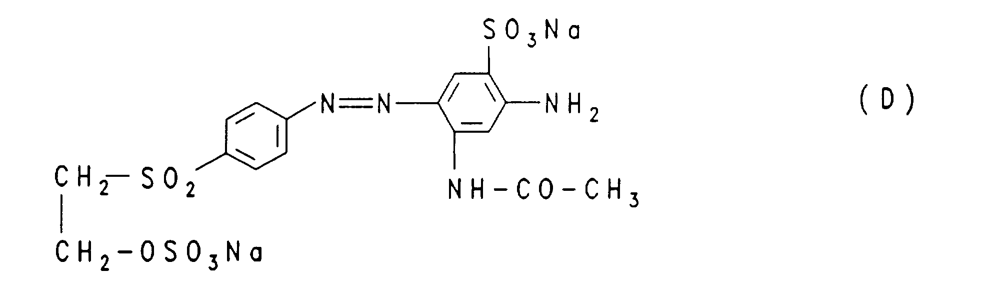 und 5 Teile einer wäßrigen Lösung, wie bspw. einer aus der Synthese erhältlichen wäßrigen Lösung, mit 0,7 Teilen des organgefärbenden Farbstoffes der Formel (E) 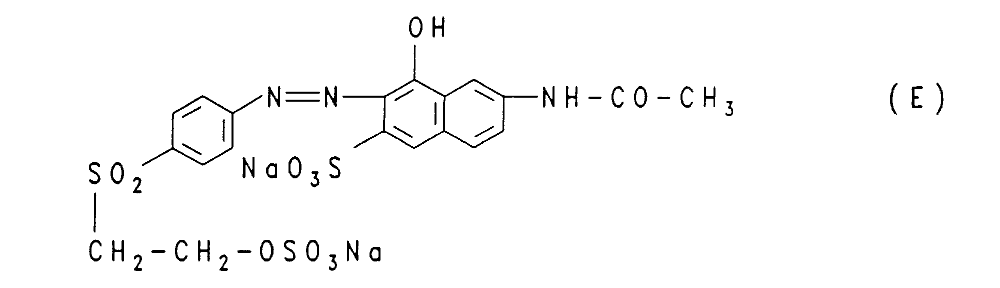 (wobei diese Lösungen noch Elektrolytsalze, wie Natriumchlorid, oder übliche Hilfsmittel, wie bspw. Puffer und tensidische Stoffe, enthalten können bzw. enthalten) werden miteinander vermischt.

Die erhaltene erfindungsgemäße wäßrige Farbstoffmischung kann direkt der färberischen Verwendung zugeführt oder durch Sprühtrocknung und gegebenenfalls Granulierung in die feste Form übergeführt werden. Die erfindungsgemäße Farbstoffmischung liefert nach den in der Technik für faserreaktive Farbstoffe üblichen Applikations- und Fixierverfahren beispielsweise auf Cellulosefasermaterialien Färbungen und Drucke mit guter Auswaschbarkeit nicht fixierter Farbstoffanteile und guter Naßliegeechtheit in einem tiefen Schwarz, das zwischen Tageslicht und abendlichem Licht nicht nuanciert.

### Beispiel 2

50 Teile einer wäßrigen Lösung, wie bspw. einer aus der Synthese erhältlichen wäßrigen Lösung, mit 14 Teilen des marineblaufärbenden Disazofarbstoffes der Formel (A) und 1 Teil des rotfärbenden Monoazofarbstoffes der Formel (B) 10 Teile einer wäßrigen Lösung, wie bspw. einer aus der Synthese erhältlichen wäßrigen Lösung, mit 4 Teilen des roten Monoazofarbstoffes der Formel (C) und 33,8 Teile einer wäßrigen Lösung, wie bspw. einer aus der Synthese erhältlichen wäßrigen Lösung, mit 4,83 Teilen des goldgelbfärbenden Monoazofarbstoffes der Formel (D) (wobei diese Lösungen noch Elektrolytsalze, wie Natriumchlorid, oder übliche Hilfsmittel, wie bspw. Puffer und tensidische Stoffe, enthalten können bzw. enthalten) werden mittels dem in dem allgemeinen Beschreibungsteil erläuterten Analysensystem und mittels der daraus resultierenden Steuerung von die Farbstofflösungen dosierenden Pumpen miteinander vermischt. Als Zielgrößen dienen hierfür der Farbort und die Einzelfarbstoffkonzentrationen einer auf konventionelle Art und Weise erstellten Farbstoffmischung gemäß vorliegender Erfindung, die von dem Koloristen als gewünschte Farbstoffmischung definiert wurde. Während der Zugabe der Farbstoffe (C) und (D) zu der Farbstofflösung der Farbstoffe (A) und (B) wird auf dem Monitor jederzeit die Farbdifferenz und die Konzentration der Einzelfarbstoffe der momentan vorliegenden Mischung protokolliert. Bei Erreichen der Zielvorgabe wird die Zugabe der Farbstofflösungen gestoppt.

Die erhaltene erfindungsgemäße wäßrige Farbstoffmischung kann direkt der färberischen Verwendung zugeführt oder durch Sprühtrocknung und gegebenenfalls Granulierung in die feste Form übergeführt werden. Die erfindungsgemäße Farbstoffmischung liefert nach den in der Technik für faserreaktive Farbstoffe üblichen Applikations- und Fixierverfahren beispielsweise auf Cellulosefasermaterialien Färbungen und Drucke mit guter Auswaschbarkeit nicht fixierter Farbstoffanteile und guter Naßliegeechtheit in einem tiefen Schwarz, das zwischen Tageslicht und abendlichem Licht nicht nuanciert.

### Beispiel 3

Man verfährt gemäß der Verfahrensweise des Beispieles 1 oder 2, jedoch unter Einsatz von 50 Teilen einer wäßrigen Lösung mit 14 Teilen des Farbstoffes der Formel (A) und 1 Teil des Farbstoffes der Formel (B), 10 Teilen einer wäßrigen Lösung von 2 Teilen des Farbstoffes der Formel (C), 5 Teilen einer wäßrigen Lösung mit 0,7 Teilen des Farbstoffes der Formel (E) und 35 Teilen einer wäßrigen Lösung mit 6,9 Teilen des Farbstoffes der Formel (F)

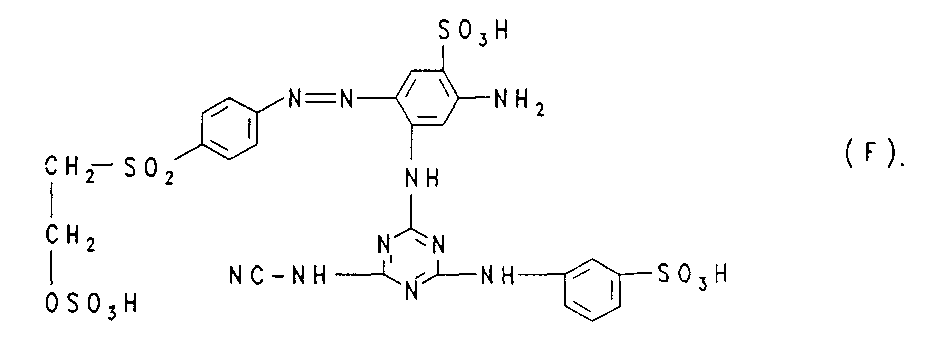

Die erhaltene erfindungsgemäße wäßrige Farbstoffmischung kann direkt der färberischen Verwendung zugeführt oder durch Sprühtrocknung und gegebenenfalls Granulierung in die feste Form übergeführt werden. Die erfindungsgemäße Farbstoffmischung liefert nach den in der Technik für faserreaktive Farbstoffe üblichen Applikations- und Fixierverfahren beispielsweise auf Cellulosefasermaterialien Färbungen und Drucke mit guter Auswaschbarkeit nicht fixierter Farbstoffanteile und guter Naßliegeechtheit in einem tiefen Schwarz, das zwischen Tageslicht und abendlichem Licht nicht nuanciert.

## Patentansprüche

1. Farbstoffmischung, gekennzeichnet durch den Gehalt eines oder mehrerer Disazofarbstoffe entsprechend der allgemeinen Forme! (1), eines oder mehrerer Monoazofarbstoffe entsprechend der allgemeinen Formel (3), eines oder mehrerer Monoazofarbstoffe der allgemeinen Formel (4), gegebenenfalls eines oder mehrerer Monoazofarbstoffe der allgemeinen Formel (2) und gegebenenfalls eines oder mehrerer Monoazofarbstoffe der allgemeinen Formel (5): 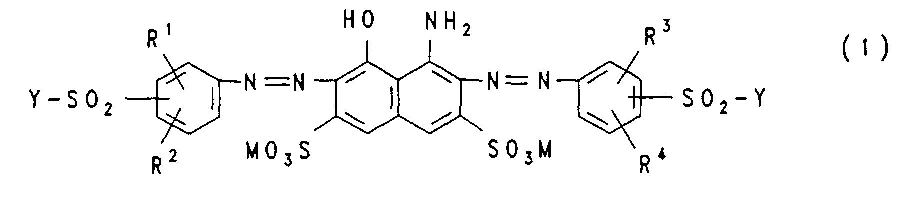 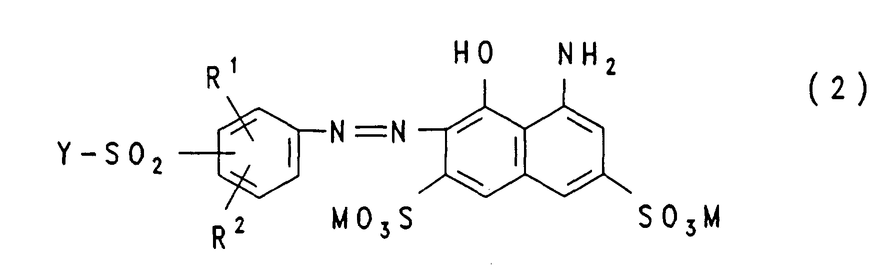 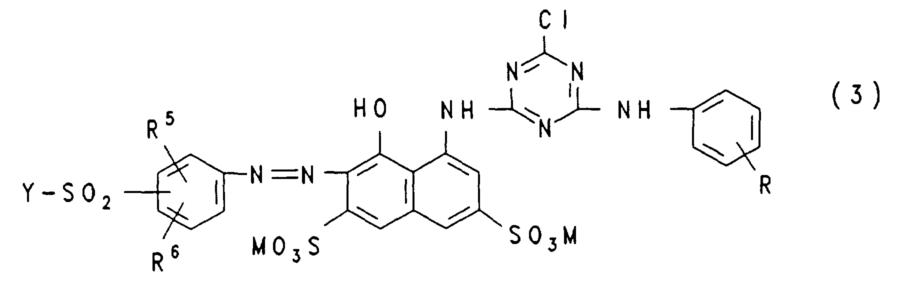 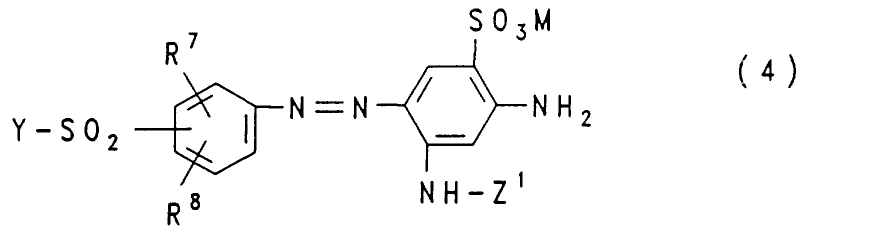 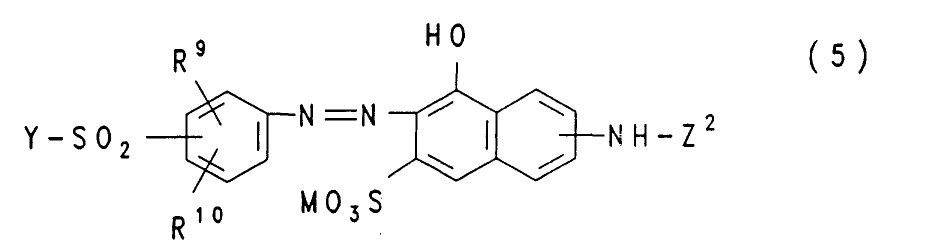 in welchen Formeln bedeuten:
M ist Wasserstoff oder ein Alkalimetall;
R¹ ist Wasserstoff, Methyl, Ethyl, Methoxy oder Ethoxy;
R² ist Wasserstoff, Methyl, Ethyl, Methoxy oder Ethoxy;
R³ ist Wasserstoff, Methyl, Ethyl, Methoxy oder Ethoxy;
R⁴ ist Wasserstoff, Methyl, Ethyl, Methoxy oder Ethoxy;
R⁵ ist Wasserstoff, Methyl, Ethyl, Methoxy oder Ethoxy;
R⁶ ist Wasserstoff, Methyl, Ethyl, Methoxy oder Ethoxy;
R⁷ ist Wasserstoff, Methyl, Ethyl, Methoxy oder Ethoxy;
R⁸ ist Wasserstoff, Methyl, Ethyl, Methoxy oder Ethoxy;
R⁹ ist Wasserstoff, Methyl, Ethyl, Methoxy oder Ethoxy;
R¹⁰ ist Wasserstoff, Methyl, Ethyl, Methoxy oder Ethoxy;
Y ist jedes, unabhängiges voneinander, Vinyl, β-Chlorethyl, β-Thiosulfatoethyl oder β-Sulfatoethyl;
R ist Wasserstoff, Methyl, Sulfo, Carboxy oder eine Gruppe der Formel -SO₂-Y mit Y einer der oben genannten Bedeutungen;
Z¹ ist Alkanoyl von 2 bis 5 C-Atomen, Benzoyl, 2,4-Dichlor-1,3,5-triazin-6-yl oder eine Gruppe der allgemeinen Formel (a) 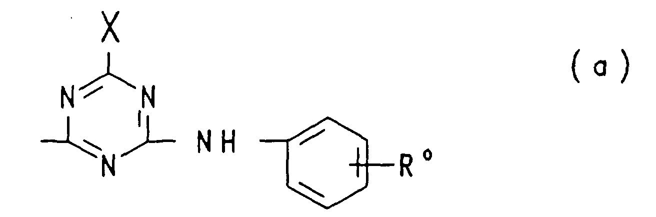 in welcher
X Chlor oder Cyanoamino und
R^{o} Sulfo, Carboxy oder eine Gruppe der allgemeinen Formel -SO₂-Y mit Y einer der oben genannten Bedeutungen ist;
Z² hat eine der Bedeutungen von Z¹;
die Gruppe -NH-Z² in Formel (5) steht in 2- oder 3-Stellung an den 6-Sulfo-8-hydroxy-naphth-7-yl-Rest gebunden.

2. Farbstoffmischung nach Anspruch 1, dadurch gekennzeichnet, daß R¹, R³, R⁵, R⁷ und R⁹ unabhängig voneinander jedes Methoxy oder Wasserstoff ist und R², R⁴, R⁶, R⁸ und R¹⁰ jedes Wasserstoff bedeuten.

3. Farbstoffmischung nach Anspruch 1 oder 2, dadurch gekennzeichnet, daß die Farbstoffe der allgemeinen Formeln (1), (2), (3), (4) und (5) in der Mischung in einem molaren Mischungsverhältnis von 10 1,3 : 1,8 : 8,6 : 1,2 bis 10 : 0 : 0,8 : 3,5 : 0 vorliegen.

4. Farbstoffmischung nach Anspruch 1 oder 2, dadurch gekennzeichnet, daß die Farbstoffe der allgemeinen Formeln (1), (2), (3), (4) und (5) in der Mischung in einem molaren Mischungsverhältnis von 10 : 1,25 : 1,55 : 7,4 : 0,95 bis 10 : 0 : 1,05 : 5,0 : 0 vorliegen.

5. Farbstoffmischung nach mindestens einem der Ansprüche 1 bis 4, dadurch gekennzeichnet, daß Y jedes unabhängig voneinander Vinyl oder β-Sulfatoethyl ist.

6. Farbstoffmischung nach mindestens einem der Ansprüche 1 bis 5, dadurch gekennzeichnet, daß die Farbstoffmischung zwei oder mehrere Farbstoffe entsprechend der allgemeinen Formel (3) enthält, bei welchen in einem oder zweien der Farbstoffe der Rest R gleich Sulfo und in dem oder den anderen Farbstoffen der Formel (3) der Rest R gleich eine Gruppe der Formel -SO₂-Y mit Y der in Anspruch 1 angegebenen Bedeutung ist.

7. Farbstoffmischung nach Anspruch 6, dadurch gekennzeichnet, daß der oder die Farbstoffe der allgemeinen Formel (3) mit R gleich Sulfo und der oder die Farbstoffe der allgemeinen Formel (3) mit R gleich -SO₂-Y im molaren Mischungsverhältnis von 1 : 1,6 bis 1 : 0,4 vorliegen.

8. Verfahren zur Herstellung einer Farbstoffmischung gemäß Anspruch 1, dadurch gekennzeichnet, daß man die Einzelfarbstoffe oder Mischungen von 2 oder 3 solcher Einzelfarbstoffe mit den anderen Einzelfarbstoffen in Form von deren Farbstoffpulvern oder wäßrigen Lösungen miteinander vermischt.

9. Verfahren nach Anspruch 8 zur Herstellung einer wäßrigen Lösung von Farbstoffmischungen, dadurch gekennzeichnet, daß man die wäßrigen Lösungen der Einzelfarbstoffe oder gegebenenfalls wäßrige Lösungen von zwei oder drei der Einzelfarbstoffe in der Weise miteinander vermischt, daß man während der Zugabe der Komponenten den Farbton der Mischung mit einer ATR-Sonde steuert.

10. Verwendung einer Farbstoffmischung von mindestens einem der Ansprüche 1 bis 7 zum Färben von hydroxy- und/oder carbonamidgruppenhaltigem Fasermaterial.

11. Verfahren zum Färben von hydroxy- und/oder carbonamidgruppenhaltigem Fasermaterial, bei welchem man einen Farbstoff oder eine Mischung von Farbstoffen in gelöster Form auf das Material aufbringt und den oder die Farbstoffe auf dem Material mittels Wärme und/oder mit Hilfe eines alkalisch wirkenden Mittels fixiert, dadurch gekennzeichnet, daß man als Farbstoffe eine Farbstoffmischung von mindestens einem der Ansprüche 1 bis 7 einsetzt.

## Claims

1. A dye mixture comprising one or more disazo dyes of the formula (1), one or more monoazo dyes of the formula (3), one or more monoazo dyes of the formula (4), if desired one or more monoazo dyes of the formula (2), and, if desired, one or more monoazo dyes of the formula (5): 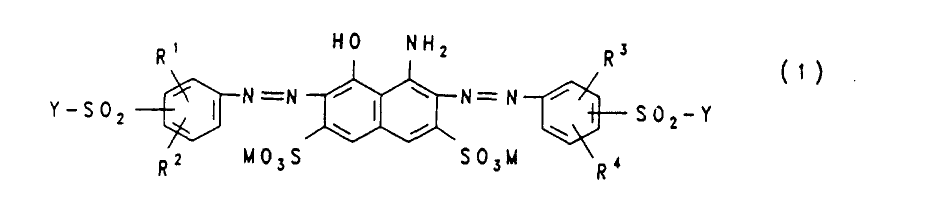 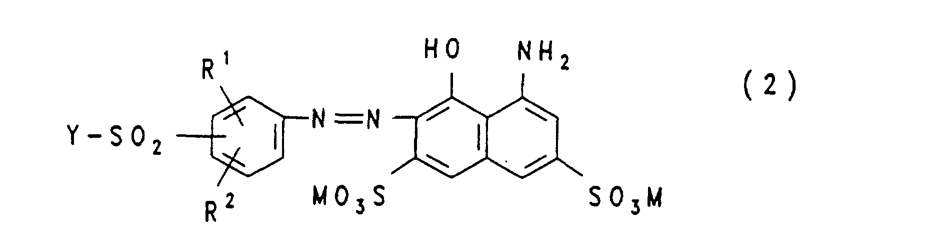 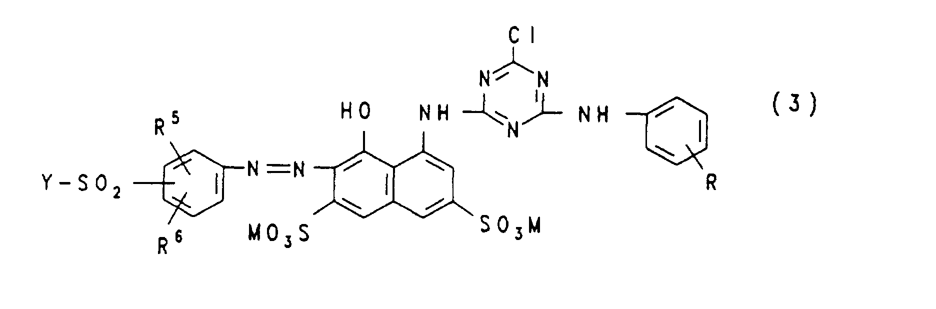 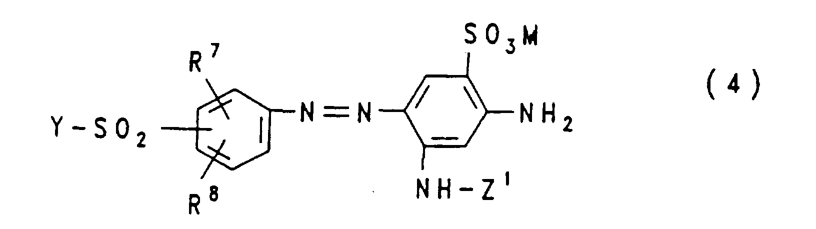 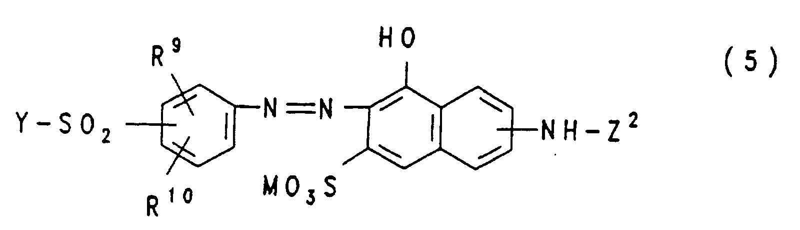 in which formulae
M is hydrogen or an alkali metal,
R¹ is hydrogen, methyl, ethyl, methoxy or ethoxy,
R² is hydrogen, methyl, ethyl, methoxy or ethoxy,
R³ is hydrogen, methyl, ethyl, methoxy or ethoxy,
R⁴ is hydrogen, methyl, ethyl, methoxy or ethoxy,
R⁵ is hydrogen, methyl, ethyl, methoxy or ethoxy,
R⁶ is hydrogen, methyl, ethyl, methoxy or ethoxy,
R⁷ is hydrogen, methyl, ethyl, methoxy or ethoxy,
R⁸ is hydrogen, methyl, ethyl, methoxy or ethoxy,
R⁹ is hydrogen, methyl, ethyl, methoxy or ethoxy,
R¹⁰ is hydrogen, methyl, ethyl, methoxy or ethoxy,
each Y, independently of the others, is vinyl, β-chloroethyl, β-thiosulfatoethyl or β-sulfato- ethyl,
R is hydrogen, methyl, sulfo, carboxyl or a group of the formula -SO₂-Y where Y has one of the meanings given above,
Z¹ is alkanoyl of 2 to 5 carbon atoms, benzoyl, 2,4-dichloro-1,3,5-triazin-6-yl or a group of the formula (a) 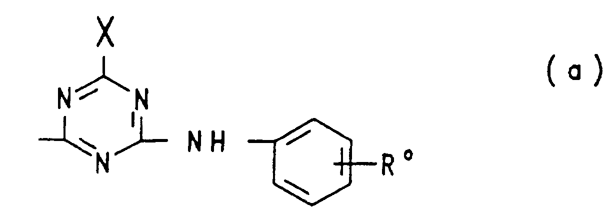 in which
X is chlorine or cyanamino and
R⁰ is sulfo, carboxyl or a group of the formula -SO₂-Y where Y has one of the meanings given above,
Z² has one of the meanings of Z¹, and the group -NH-Z² in formula (5) is attached to the 6-sulfo-8-hydroxynaphth-7-yl radical in the 2 or 3 position.

2. A dye mixture as claimed in claim 1, wherein R¹, R³, R⁵, R⁷ and R⁹, independently of one another, are each methoxy or hydrogen and R², R⁴, R⁶, R⁸ and R¹⁰ are each hydrogen.

3. A dye mixture as claimed in claim 1 or 2, wherein the dyes of the formulae (1), (2), (3), (4) and (5) are present in the mixture in a molar mixing ratio of 10 : 1.3 : 1.8 : 8.6 : 1.2 to 10 : 0 : 0.8 : 3.5 : 0.

4. A dye mixture as claimed in claim 1 or 2, wherein the dyes of the formulae (1), (2), (3), (4) and (5) are present in the mixture in a molar mixing ratio of 10 : 1.25 : 1.55 : 7.4 : 0.95 to 10 : 0 : 1.05 : 5.0 : 0.

5. A dye mixture as claimed in at least one of claims 1 to 4, wherein each Y, independently of the others, is vinyl or β-sulfatoethyl.

6. A dye mixture as claimed in at least one of claims 1 to 5, wherein the dye mixture contains two or more dyes of the formula (3) in which in one or two of the dyes the radical R is sulfo and in the other dye(s) of the formula (3) the radical R is a group of the formula -SO₂-Y where Y has the meaning given in claim 1.

7. A dye mixture as claimed in claim 6, wherein the dye(s) of the formula (3) in which R is sulfo and the dye(s) of the formula (3) in which R is -SO₂-Y are present in a molar mixing ratio of 1 : 1.6 to 1 : 0.4.

8. A process for preparing a dye mixture as claimed in claim 1, which comprises mixing the individual dyes or mixtures of 2 or 3 of such individual dyes with the other individual dyes with one another in the form of their dye powders or aqueous solutions.

9. The process as claimed in claim 8 for preparing an aqueous solution of dye mixtures, wherein the aqueous solutions of the individual dyes or, if desired, the aqueous solutions of two or three of the individual dyes are mixed with one another in such a manner that the hue of the mixture is controlled during addition of the components by means of an ATR probe.

10. Use of a dye mixture as claimed in at least one of claims 1 to 7 for dyeing hydroxyl- and/or carboxamido-containing fiber material.

11. A process for dyeing hydroxyl- and/or carboxamido-containing fiber material, in which a dye or a mixture of dyes is applied to the material in dissolved form and the dye(s) are fixed on the material by means of heat and/or by reaction with an alkaline agent, which process comprises using, as the dyes, a dye mixture as claimed in at least one of claims 1 to 7.

## Revendications

1. Mélange de colorants, caractérisé par la teneur en un ou en plusieurs colorants diazoïques selon la formule générale (1), en un ou en plusieurs colorants monoazoïques selon la formule générale (3), en un ou en plusieurs colorants monoazoïques de formule générale (4), le cas échéant en un ou en plusieurs colorants monoazoïques de formule générale (2) et le cas échéant en un ou en plusieurs colorants monoazoïques de formule générale (5) : 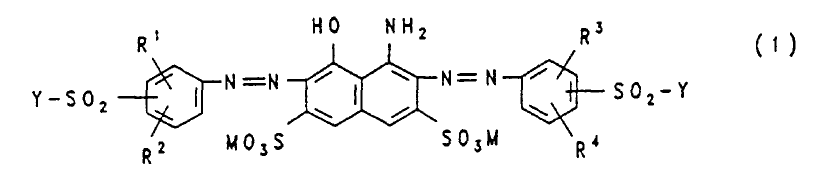 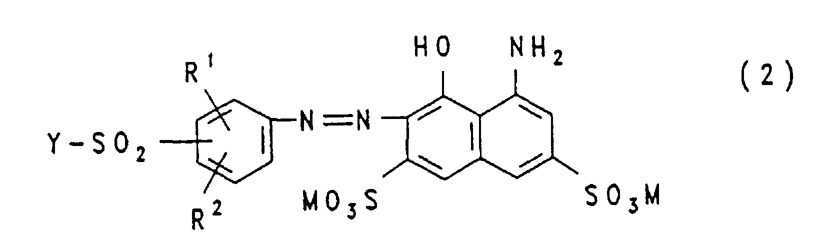 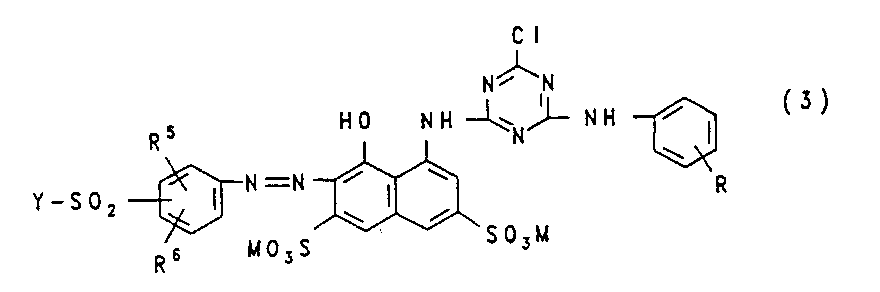 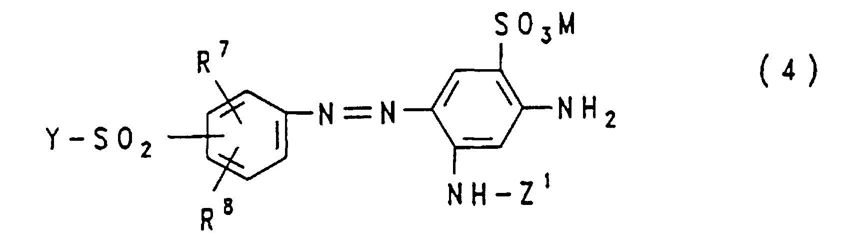 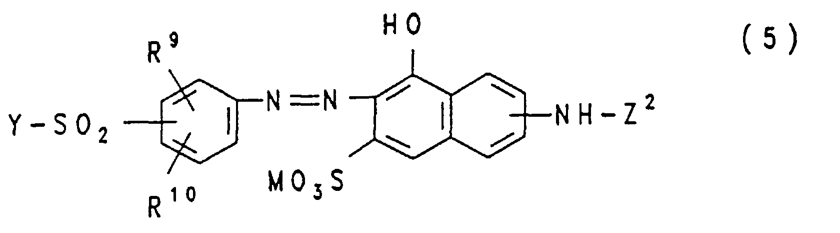 formules dans lesquelles
M représente un hydrogène ou un métal alcalin ;
R¹ représente un hydrogène, un méthyle, un éthyle, un méthoxy ou un éthoxy ;
R² représente un hydrogène, un méthyle, un éthyle, un méthoxy ou un éthoxy ;
R³ représente un hydrogène, un méthyle, un éthyle, un méthoxy ou un éthoxy ;
R⁴ représente un hydrogène, un méthyle, un éthyle, un méthoxy ou un éthoxy ;
R⁵ représente un hydrogène, un méthyle, un éthyle, un méthoxy ou un éthoxy ;
R⁶ représente un hydrogène, un méthyle, un éthyle, un méthoxy ou un éthoxy ;
R⁷ représente un hydrogène, un méthyle, un éthyle, un méthoxy ou un éthoxy ;
R⁸ représente un hydrogène, un méthyle, un éthyle, un méthoxy ou un éthoxy ;
R⁹ représente un hydrogène, un méthyle, un éthyle, un méthoxy ou un éthoxy ;
R¹⁰ représente un hydrogène, un méthyle, un éthyle, un méthoxy ou un éthoxy ;
Y représente chacun, indépendamment l'un de l'autre,des vinyle, β-chloroéthyle, β-thiosulfatoéthyle ou β-sulfatoéthyle ;
R représente un hydrogène, un méthyle, un sulfo, un carboxy ou un groupement de formule -SO₂-Y, avec Y ayant une des significations susmentionnées ;
Z¹ représente un alcanoyle comprenant 2 à 5 atomes de carbone, un benzoyle, un 2,4-dichloro-1,3,5-triazin-6-yle ou un groupement de formule générale (a) 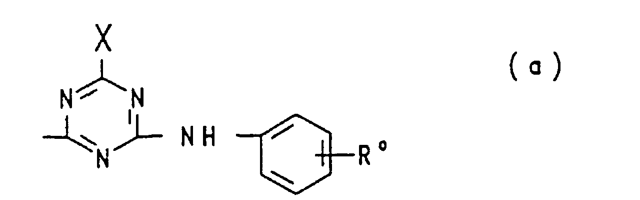
dans laquelle
X représente un chlore ou un cyanoamino et
R° représente un sulfo, un carboxy ou un groupement de formule générale -SO₂-Y, avec Y ayant une des significations susmentionnées ;
Z² présente une des significations de Z¹ ;
le groupement -NH-Z² dans la formule (5) est lié en position 2 ou 3 au radical 6-sulfo-8-hydroxynapht-7-yle.

2. Mélange de colorants selon la revendication 1, caractérisé en ce que R¹, R³, R⁵, R⁷ et R⁹ représentent chacun, indépendamment l'un de l'autre, un méthoxy ou un hydrogèhe et R² R⁴, R⁶, R⁸ et R¹⁰ représentent chacun un hydrogène.

3. Mélange de colorants selon la revendication 1 ou 2, caractérisé en ce que les colorants des formules générales (1), (2), (3), (4) et (5) dans le mélange sont présents en un rapport molaire de mélange de 10:1,3:1,8:8,6:1,2 à 10:0:0,8:3,5:0.

4. Mélange de colorants selon la revendication 1 ou 2, caractérisé en ce que les colorants des formules générales (1), (2), (3), (4) et (5) dans le mélange sont présents en un rapport molaire de mélange de 10:1,25:1,55:7,4:0,95 à 10:0:1,05:5,0:0.

5. Mélange de colorants selon au moins l'une quelconque des revendications 1 à 4, caractérisé en ce que Y est chacun, indépendamment l'un de l'autre, un vinyle ou un β-sulfatoéthyle.

6. Mélange de colorants selon au moins l'une quelconque des revendications 1 à 5, caractérisé en ce que le mélange de colorants contient deux ou plusieurs colorants selon la formule générale (3), parmi lesquels, dans un ou deux des colorants, le radical R représente un sulfo et dans l'autre ou les autres colorants de formule (3), le radical R représente un groupement de formule -SO₂-Y avec Y ayant la signification indiquée dans la revendication 1.

7. Mélange de colorants selon la revendication 6, caractérisé en ce que le ou les colorants de formule générale (3), avec R représentant un sulfo, et le ou les colorants de formule générale (3), avec R représentant -SO₂-Y, se trouvent dans le rapport molaire de mélange de 1:1,6 à 1:0,4.

8. Procédé pour la préparation d'un mélange de colorants selon la revendication 1, caractérisé en ce qu'on mélange les uns avec les autres les colorants séparés ou des mélanges de 2 ou de 3 de ces colorants séparés avec les autres colorants séparés sous forme de leurs poudres de colorant ou de leurs solutions aqueuses.

9. Procédé selon la revendication 8 pour la préparation d'une solution aqueuse de mélanges de colorants, caractérisé en ce qu'on mélange les unes avec les autres les solutions aqueuses des colorants séparés ou, le cas échéant, des solutions aqueuses de deux ou de trois des colorants séparés, de telle manière qu'on règle la nuance du mélange pendant l'addition des composants au moyen d'une sonde ATR.

10. Utilisation d'un mélange de colorants selon au moins l'une quelconque des revendications 1 à 7 pour la teinture de matériau fibreux contenant des groupements hydroxy et/ou carboxamide.

11. Procédé pour la teinture de matériau fibreux contenant des groupements hydroxy et/ou carboxamide, dans lequel on applique un colorant ou un mélange de colorants sous forme dissoute sur le matériau et on fixe le ou les colorants sur le matériau au moyen de chaleur et/ou à l'aide d'un agent à action alcaline, caractérisé en ce qu'on utilise en tant que colorants un mélange de colorants selon au moins l'une quelconque des revendications 1 à 7.
